# EUROPÄISCHE PATENTANMELDUNG

(11) **EP 3 015 312 A1**
(43) Veröffentlichungstag der Anmeldung: **04.05.2016**
(21) Anmeldenummer: 15192430.5
(22) Anmeldetag: 30.10.2015
(51) Int. Cl.: B60Q 1/26

(54) **BEFESTIGUNGSSET FÜR WARNBALKEN VON EINSATZFAHRZEUGEN SOWIE VERFAHREN ZUM BEFESTIGEN VON WARNBALKEN AN EINSATZFAHRZEUGEN**

(30) Priorität: 31.10.2014 DE 102014015957
(71) Anmelder: PINTSCH BAMAG Antriebs- und Verkehrstechnik GmbH, 46537 Dinslaken (DE)
(72) Erfinder: Schmidt, Diana, 47228 Duisburg (DE); Bartkowiak, Dominik, 44319 Dortmund (DE)
(74) Vertreter: CBDL Patentanwälte

(57) **Zusammenfassung**

Befestigungsset für Warnbalken von Einsatzfahrzeugen umfassend wenigstens einen an einem Fahrzeug befestigbaren Träger (30) zum Tragen einer Grundplatte (24) eines Warnbalkens (22), an der verschiedene optische und/oder akustische Signaleinrichtungen befestigt oder befestigbar sind, und wenigstens eine insbesondere durch computergestütztes Fräsen oder Schneiden an die Kontur des Daches (16) des Fahrzeugs (16) angepasste oder anpassbare Kunststoffverblendungsschale (14), wobei die Kunststoffverblendungsschale/-schalen (14) dazu ausgebildet ist/sind, im bestimmungsgemäßen Montagezustand sowohl den bei der Montage eines Warnbalkens (22) auf einem Fahrzeugdach (16) mittels des wenigstens einen Trägers (30) zwischen der Grundplatte (24) des Warnbalkens (22) und dem Fahrzeugdach (16) entstehenden Freiraum zu verblenden als auch eine den/die Träger (30) zu den Außenseiten von Fahrzeug und Warnbalken abdeckende Einkapselung zu bilden.

## Beschreibung

Die Erfindung betrifft ein Befestigungsset für Warnbalken von Einsatzfahrzeugen sowie ein Verfahren zum Befestigen eines Warnbalkens an einem Einsatzfahrzeug. Die Erfindung betrifft auch ein mit einem entsprechenden Warnbalken ausgestattetes Einsatzfahrzeug sowie die Verwendung einer Verblendungsschale zur Befestigung eines Warnbalkens an einem Einsatzfahrzeug.

### HINTERGRUND DER ERFINDUNG

Es ist seit langem bekannt, Einsatzfahrzeuge z.B. von Polizei und Feuerwehr dachseitig mit Sondersignalanlagen in Form sogenannter "Warnbalken" auszustatten.

Moderne Warnbalken sind üblicherweise modular aufgebaut und besitzen eine Grundplatte, auf der gemäß den jeweiligen kundenspezifischen Vorgaben verschiedene optische und/oder akustische Signaleinrichtungen angeordnet werden können, über die dann üblicherweise eine zumindest partiell lichtdurchlässige Haube gesetzt wird, die die Signaleinrichtungen vor Witterungseinflüssen schützt und den Warnbalken strömungsgünstig und optisch ansprechend gestaltet.

Da Warnbalken auf Grund der verwendeten Signaleinrichtungen ein nicht unerhebliches Gewicht haben und auch bei hohen Fahrgeschwindigkeiten und extremen Fahrsituationen (Verfolgung von anderen Fahrzeugen, schneller Transport von Kranken und Verletzen) sicher an den Fahrzeugen gehaltert werden müssen, bringt die Befestigung eines Warnbalkens auf einem Fahrzeugdach verschiedene, nicht-triviale Probleme mit sich, zu deren Lösung bereits verschiedene Vorschläge gemacht wurden, beispielsweise in den Druckschriften DE 20 2006 000 974 U1, DE 10 2007 042 504 B4 und DE 20 2004 017 744 U1.

Ein bislang nur unbefriedigend gelöstes Problem ist der Ausgleich bzw. die Verblendung des sich bei der Montage ergebenden Raumes zwischen der Unterseite der genannten, im Regelfall gerade verlaufenden Grundplatte, auf der die optischen und/oder akustischen Warneinrichtungen angeordnet werden, und der üblicherweise gewölbten Fahrzeugdachoberseite. Ein solcher Freiraum soll sowohl aus ästhetischen, insbesondere aber auch aus technischen Gründen, z.B. zur Vermeidung von Windgeräuschen, verblendet werden.

Bei den bislang bekannten Lösungen werden fahrzeugdachspezifische Zwischenkörper oder auch Tragkörper in der Regel in Form von Kunststoff-Spritzgussteilen oder Formteilen verwendet, die an die Außenkontur der Dachoberseite im Bereich des Warnbalkens angepasst sind und eine Doppelfunktion haben: sie tragen die Grundplatte und verkleiden gleichzeitig den Raum zwischen Grundplatte und Fahrzeugdachoberseite. Die DE 197 44 717 A1 lehrt eine Befestigung, bei der ein insbesondere an die Kontur eines Fahrzeugdaches, insbesondere an einen Schiebedachausschnitt, angepasstes, fahrzeugspezifisches Unterteil ein Standardoberteil trägt.

Die genannten fahrzeugspezifischen Zwischen- oder Tragkörper haben sich zwar in der Praxis zumindest teilweise bewährt, sie sind jedoch relativ teuer in der Herstellung, da für jeden Fahrzeugtyp eine eigene spezielle Form, z.B. eine Spritzgussform, angefertigt werden muss, um damit entsprechende Zwischen- oder Tragkörper herstellen zu können, die auch den genannten hohen Anforderungen an die Stabilität der Halterung bei hohen Geschwindigkeiten und schnellen Lastwechseln genügen. Wenn Kunden dann einen eher seltenen Fahrzeugtyp als Einsatzfahrzeug verwenden wollen, verteuert dies die Kosten pro Warnbalken erheblich.

Um den Kostenaufwand für tragende fahrzeugspezifische Sonderteile zu reduzieren, schlägt die DE 103 32 498 A1 vor, zur Befestigung eines Warnbalkens einen Standarddachgepäckträger zu verwenden wie er für die meisten Fahrzeuge im Zubehörhandel z.B. zur Befestigung von Dachboxen u.dgl. angeboten wird und der zwei Querträgerhalter und einen Querträger umfasst. Die Querträgerhalter werden an einer Dachreling oder einer Regenrinne befestigt und halten den Querträger, an dem dann der eigentliche Warnbalken insbesondere durch Verklemmen befestigt wird. Weiter schlägt die DE 103 32 498 fahrzeugspezifische Zusatzteile vor, nämlich zwei Verschlusskappen, die den Warnbalken im bestimmungsgemäßen Montagezustand fahrzeugseitig links und rechts abschließen, jedoch im Bereich der Querträgerhalter ausgespart sind, und eine sog. Leitblende, die an dem eigentlichen Warnbalken befestigt wird und nur die Aufgabe haben soll, den Bereich zwischen Warnbalken und Fahrzeugdach zu verblenden.

Allerdings haben die Standardquerträger je nach Fahrzeugtyp und Querträgerhersteller unterschiedliche Profile und unterschiedliche Abstände zum Fahrzeugdach, so dass eine Reihe von Zusatzteilen, wie z.B. Distanzstücke, bereitgehalten werden muss, um standardisierte Warnbalken an handelsüblichen Dachgepäckträgern befestigen zu können. Da gemäß der Lehre der DE 103 32 498 die Querträgerhalter im bestimmungsgemäßen Montagezustand des Warnbalkens von außen zugänglich bleiben, sind sie nicht nur Witterungseinflüssen ausgesetzt, sondern können auch ohne weiteres von Dritten manipuliert werden.

Ein Problem bei der Verwendung handelsüblicher Dachgepäckträger zur Befestigung von Warnbalken ist, dass solche Dachgepäckträger nicht zur Aufnahme von größeren Drehbelastungen um die Längsachse des jeweiligen Querträgers ausgelegt sind, da normalerweise immer zwei Querträger in einem Abstand zueinander auf einem Fahrzeugdach befestigt werden, auf die die Last, z.B. eine Dachbox, aufgelegt und dann mittels Klemmhalterungen befestigt wird. Ein typischer Warnbalken hat zwar eine gewisse Ausdehnung in der Fahrzeuglängsrichtung, z.B. etwa 20 bis 30 cm, jedoch ist diese typischerweise nicht so groß, dass es ohne weiteres möglich wäre, zwei Querträger so eng beieinander anzuordnen, dass der Warnbalken an beiden Querträgern befestigt werden könnte. Zudem wäre bei Verwendung zweier handelsüblicher Querträger die Kostenersparnis gegenüber einem fahrzeugspezifischen Träger stark reduziert. Wird nun der Warnbalken gemäß der Lehre der DE 103 32 498 an nur einem handelsüblichen Querträger befestigt, treten bei höheren Fahrtgeschwindigkeiten sehr große Kräfte um die Längsachse des Querträgers auf, die versuchen den Warnbalken um den Querträger in Fahrtrichtung nach hinten zu drehen und das Leitblech in Fahrtrichtung vorn vom Dach abzuheben. Diese Befestigungsweise hat sich daher in der Praxis nicht durchgesetzt.

### OFFENBARUNG DER ERFINDUNG

Der Erfindung liegt die Aufgabe zugrunde, einen Weg aufzuzeigen, Warnbalken in besonders kostengünstiger, gleichzeitig aber auch technisch und ästhetisch befriedigender Weise an einem Fahrzeugdach befestigen zu können und die Anzahl der dazu benötigten Teile sehr klein zu halten, wobei zudem fahrzeugspezifische Teile besonders einfach herzustellen sein sollen.

Die Aufgabe wird gelöst von einem Befestigungsset gemäß Anspruch 1 bzw. einem Verfahren gemäß Anspruch 9. Die Unteransprüche betreffen vorteilhafte Ausgestaltungen und Weiterbildungen. Der nebengeordnete Anspruch 14 betrifft die Verwendung einer speziellen Kunststoffschale bei der Warnbalkenbefestigung. Der nebengeordnete Anspruch 15 betrifft ein Einsatzfahrzeug mit einem erfindungsgemäß befestigten Warnbalken.

Die Erfindung hat unter anderem die Vorteile, einerseits die bei einem Teil der bekannten Befestigungsarten vorgesehenen, aufwendig hergestellten Zwischen- oder Haltekörper überflüssig zu machen und die Tragfunktion von der Verblendungsfunktion zu entkoppeln, andererseits die Tragfunktion aber nicht einfach auf Dachgepäckträger zu verlagern, die nicht zur Aufnahme von Drehkräften ausgelegt sind.

Ein weiterer großer Vorteil der Erfindung ist, dass die tragenden Teile im bestimmungsgemäßen Montagezustand des Warnbalkens zu den Außenseiten von Warnbalken und Fahrzeug eingekapselt und vor Witterungseinflüssen und Manipulationen geschützt sind. Zudem erlaubt es die Erfindung vorteilhaft, eine preisgünstig herstellbare Universal-Kunststoffverblendungsschale einzusetzen, die z.B. durch computergestütztes Fräsen oder Schneiden leicht an eine fahrzeugspezifische Kontur angepasst werden kann und die keine Tragfunktion im eigentlichen Sinne erfüllen muss. Damit wird es möglich, die komplette Verblendung des Raums zwischen einer Grundplatte und dem Fahrzeugdach und die Einkapselung der tragenden Teile mit nur einer Schale oder zwei Halbschalen zu realisieren.

Weitere Einzelheiten und Vorteile der Erfindung ergeben sich aus der nachfolgenden rein beispielhaften und nicht-beschränkenden Beschreibung von verschiedenen Ausführungsbeispielen in Verbindung mit der Zeichnung.

### KURZE BESCHREIBUNG DER ZEICHNUNG

- Fig. 1: zeigt in perspektivischer Darstellung eine erste Ausführungsvariante einer erfindungsgemäßen Universal-Kunststoffverblendungsschale.
- Fig. 2: zeigt einen Abschnitt der Schale gemäß Fig. 1.
- Fig. 3: zeigt einen weiteren Abschnitt der Schale gemäß Fig. 1.
- Fig. 4: zeigt in perspektivischer Darstellung zwei aus jeweils einem Abschnitt einer Schale gemäß Fig. 3 hergestellte und an eine fahrzeugspezifische Dachkontur angepasste Verblendungshalbschalen nach dem Aufsetzen selbiger auf ein Fahrzeugdach.
- Fig. 5: zeigt wesentliche Teile eines erfindungsgemäßen Befestigungssets nebst weiteren Teilen eines Warnbalkens und eines Abschnittes eines Fahrzeugdaches in schematischer Explosionsdarstellung von vorn.
- Fig. 6: zeigt die Teile gemäß Fig. 5 in perspektivischer Ansicht.
- Fig. 7: zeigt die Teile gemäß Fig. 5 in Seitenansicht.
- Fig. 8: zeigt die Teile gemäß Fig. 7 im montierten Zustand.
- Fig. 9: zeigt einen fertig montierten Warnbalken in perspektivischer Seitenansicht.
- Fig. 10: zeigt in perspektivischer Darstellung eine zweite Ausführungsvariante einer erfindungsgemäßen Universal-Kunststoffverblendungsschale nach dem Schritt des Anpassens an die Dachkontur eines Fahrzeugs.

### BESCHREIBUNG BEVORZUGTER AUSFÜHRUNGSFORMEN

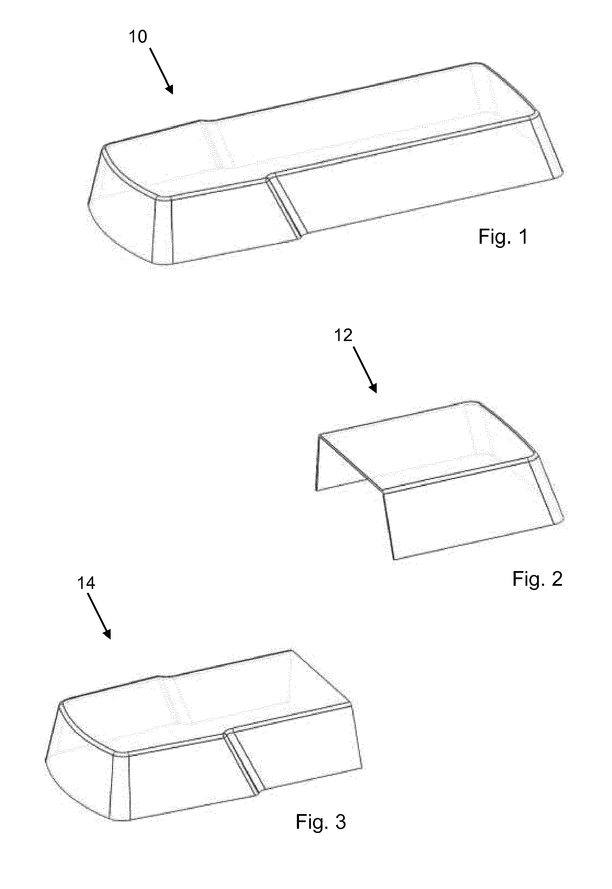

In der Fig. 1 ist eine in ihrer Gesamtheit mit 10 bezeichnete Universal-Kunststoffverblendungsschale in einer ersten Ausführungsform gezeigt, die bei diesem Ausführungsbeispiel eine Breite besitzt, die nicht der Breite eines Fahrzeugdaches eines typischen Einsatzfahrzeuges entspricht, so dass zur Herstellung von zwei erfindungsgemäßen Verblendungshalbschalen auch zwei dieser Universalschalen benötigt werden.

Wie in der Zeichnung gut zu erkennen, besitzt die Universalschale 10 im in der Zeichnung linken Bereich einen gestuften Abschnitt, während der in Zeichnung rechte Bereich glatt ausgebildet ist. Durch entsprechendes Abschneiden des in der Zeichnung linken bzw. rechten Endbereiches können dann Verblendungshalbschalen wie die in den Figuren 2 bzw. 3 gezeigten Verblendungshalbschalen 12 bzw. 14 erzeugt werden.

Die Halbschalen lassen sich insbesondere durch computergestütztes Fräsen oder Schneiden schnell und kostengünstig an die Kontur des Daches eines Fahrzeuges, das mit einem Warnbalken ausgestattet werden soll, anpassen.

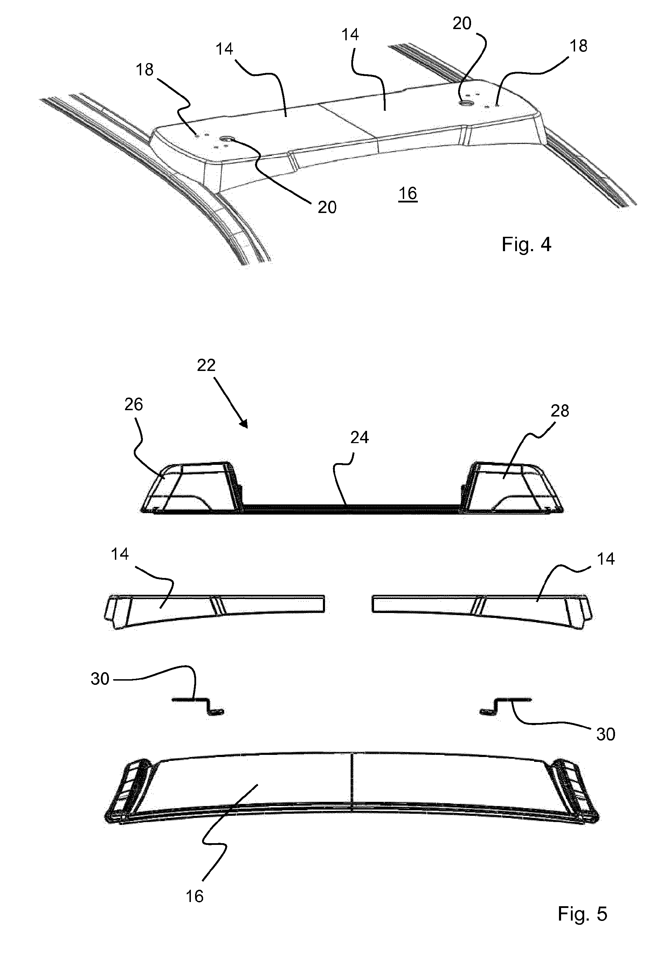

In Fig. 4 ist schematisiert der Zustand nach dem Anpassen zweier Halbschalen 14 an die Kontur eines Fahrzeugdaches 16 gezeigt. Zweckmäßigerweise wird dabei so vorgegangen, dass die entsprechenden Daten über die Kontur des Fahrzeugdaches 16, die heutzutage in der Regel beim Fahrzeughersteller in elektronischer Form vorliegen, in eine geeignete Fräs- oder Schneidmaschine eingegeben werden, die dann die Schalen 14 so zuschneidet, dass ihre offenen Unterseiten bündig am Dach 16 anliegen können. Es hat sich gezeigt, dass dies so präzise erfolgen kann, dass auf gesonderte Dichtungen zwischen der Schale und dem Fahrzeugdach sogar verzichtet werden kann. Ein erfindungsgemäßes Befestigungsset kann jedoch, je nach Kundenwunsch, auch Dichtungsmittel, z.B. Gummidichtungen umfassen, die zwischen der oder den Schalen und dem Fahrzeugdach angeordnet werden.

Wie in Fig. 4 angedeutet, sind in jede der beiden Halbschalen 14 Öffnungen eingebracht, und zwar im gezeigten Beispiel jeweils vier Öffnungen 18 zur Durchführung von Befestigungsschrauben zwecks Befestigung einer Warnbalkengrundplatte an unter den Schalen angebrachten Trägern, was nachfolgend im Zusammenhang mit Fig. 5 noch erläutert wird, und jeweils eine Öffnung 20 zur Durchführung von Kabeln. Von den Öffnungen 18 wurden aus Gründen der Übersichtlichkeit nur zwei mit Bezugszeichen versehen. Die Schalen 14 werden dann zwischen den nachfolgend beschriebenen Trägern und der ebenfalls nachfolgend beschriebenen Grundplatte fixiert, ohne dass ihnen über die Tatsache hinaus, dass sie sich zwischen Grundplatte und Träger befinden, eine tragende Funktion zukäme.

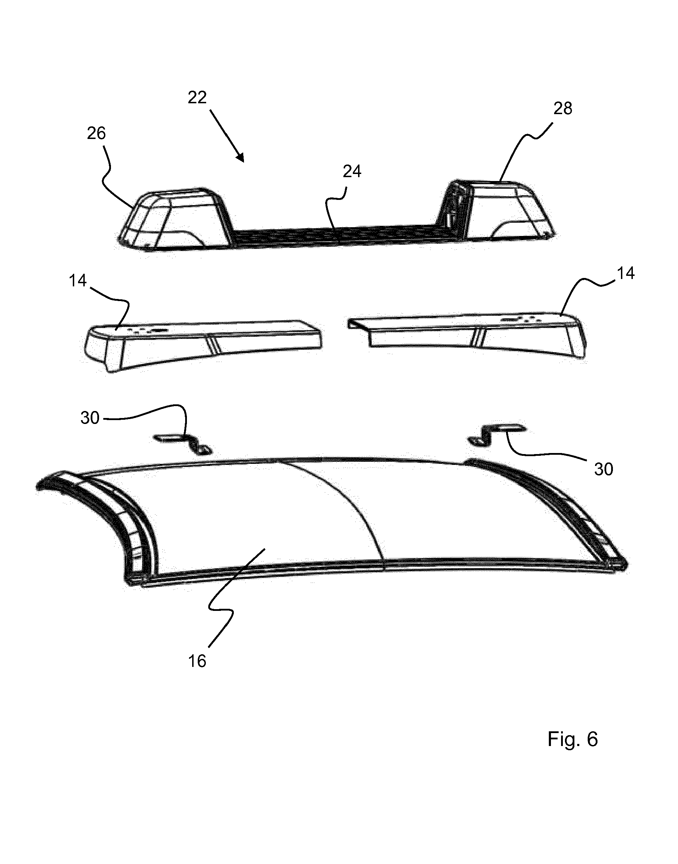

In den Figuren 5 bis 8 sind wesentliche Elemente der Erfindung stark schematisiert in unterschiedlichen Ansichten und Montagezuständen dargestellt. Nicht dargestellt sind fachübliche Befestigungsmittel wie Schrauben und Muttern. Dargestellt ist ferner ein Abschnitt eines Fahrzeugdaches 16, auf dem ein Warnbalken 22, von dem hier nur bestimmte Teile, nämlich eine Grundplatte 24 und ein linkes und ein rechtes Lichtmodul 26 bzw. 28 zu sehen sind, erfindungsgemäß befestigt werden soll, und zwar mittels eines Befestigungssets, das bei dieser Ausführungsform zwei Träger 30, die hier in Form von Winkelträgern vorliegen und die in an sich bekannter Weise auf das Fahrzeugdach 16 aufgeschraubt werden, und zwei Verblendungshalbschalen 14 umfasst.

Wenn das Dach des Einsatzfahrzeuges Relinge umfasst, können an Stelle der gezeigten Winkelträger auch Halterungen verwendet werden, die an den Dachrelingen angreifen und z.B. mit diesen verschraubt werden oder sich an diesen festklemmen.

Wenn die Träger 30 am Fahrzeug befestigt sind, werden bei diesem Ausführungsbeispiel zwei Verblendungshalbschalen 14 über die Träger gesetzt, wobei die dachzugewandte Kontur der Schalen 14 zuvor an die Dachkontur angepasst wurde, insbesondere durch computergestütztes Fräsen oder Schneiden. Die Schalen haben bei der Montage eine reine Funktion der Verblendung, vorteilhaft aber keine im eigentlichen Sinne tragende Funktion für den Warnbalken, weshalb die Anforderungen an die entsprechende Materialstärke und insbesondere die Ausbildung der dachzugewandten Struktur sehr einfach und kostengünstig gehalten werden können. Die Schalen können zwar separat an den Trägern oder der Grundplatte befestigt werden, z.B. durch Verschrauben oder Verkleben, werden jedoch bevorzugt einfach zwischen der Grundplatte und den Träger fixiert. Dazu können sie zwischen den Trägern und der Grundplatte eingeklemmt werden, wobei Befestigungsschrauben zur Befestigung der Grundplatte an den Trägern die Schalen durchdringen und ggf. auch formschlüssig fixieren können. Auch können spezielle Formelemente, z.B. Vorsprünge, an den Trägern und/oder der Grundplatte vorgesehen und die Schalen mit dazu komplementären Aufnahmen versehen sein, um die Schalen gegen seitliche Verschiebungen formschlüssig zu sichern. Die Träger oder die Grundplatte können auch mit Auflageelementen, z.B. in Form von mit Innengewinden versehenen Zylindern, und die Schalen mit zu den Auflageelementen partiell komplementären Ausnehmungen versehen sein, so dass die Träger und Grundplatte in direkten Kontakt miteinander kommen.

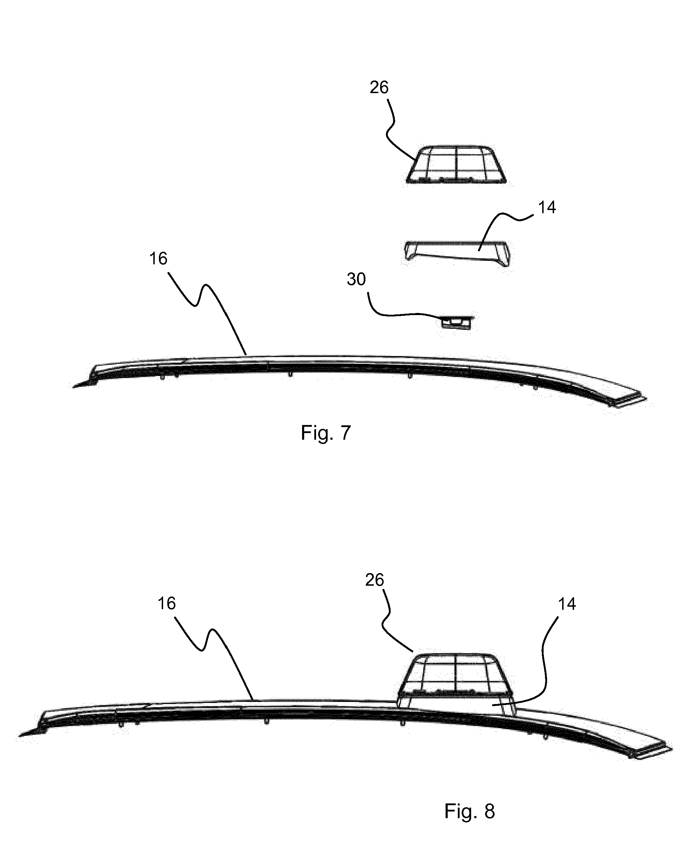

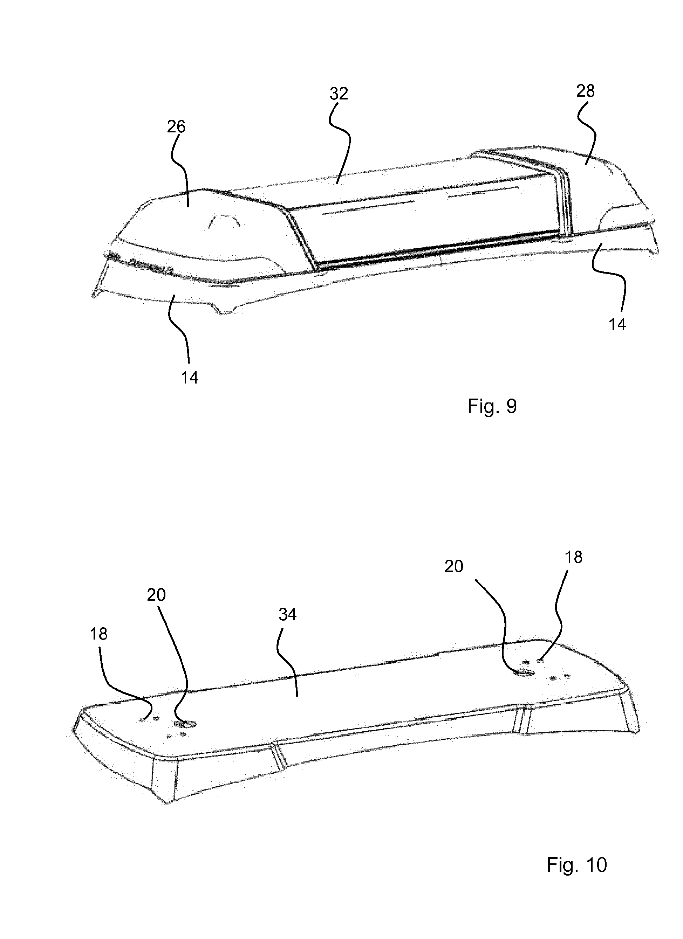

Auf die Schalen 14 wird dann die Grundplatte 24 des Warnbalkens 22 gesetzt und mit den Trägern 30 verbunden, üblicherweise also verschraubt. Fig. 8 zeigt schematisch den fertig montierten Zustand. Der Warnbalken 22 kann dann im mittigen Bereich zwischen den beiden Lichtmodulen 26 und 28 mit weiteren optischen und/oder akustischen Signaleinrichtungen gemäß dem jeweiligen Kundenwunsch ausgestattet und mit einer Abdeckhaube versehen werden. Fig. 9 zeigt einen fertig montierten Warnbalken mit einer solchen Abdeckhaube 32. Die Lichtmodule 26 und 28 können die Grundplatte 24 und ggf. auch die Verblendungsschalen 14 seitlich überragen.

Dem Fachmann ist klar, dass die oben genannten einzelnen Montageschritte nicht in der angeführten Reihenfolge durchgeführt werden müssen. Daher sind auch die Ansprüche nicht so zu verstehen, dass sie eine bestimmte Montagereihenfolge festlegen. Beispielweise können die Lichtmodule und/oder die weiteren Signaleinrichtungen auch ganz oder teilweise an der Grundplatte befestigt werden, bevor diese an den Trägern befestigt wird.

Anstelle der in Fig. 1 gezeigten Schale kann auch eine Universal-Verblendungsschale verwendet werden, die an ihren beiden Endbereichen gleich (z.B. beidseits gestuft oder beidseits glatt) ausgestaltet ist und deren Breite bereits an die Breite des Daches eines typischen Einsatzfahrzeug angepasst ist. Fig. 10 zeigt eine solche Schale 34. Zur Herstellung einer fahrzeugspezifischen Verblendungsschale muss dann lediglich die unterseitige Kontur der Universal-Verblendungsschale an die entsprechende Fahrzeugdachkontur angepasst werden, was bei der in Fig. 10 gezeigten Schale 34 bereits erfolgt ist, wobei in die Schale auch bereits die oben genannten Öffnungen 18 und 20 eingebracht sind, und zwar im ganzen acht Öffnungen 18 zur Durchführung von Befestigungsschrauben und zwei Öffnungen 20 zur Durchführung von Kabeln. Von den Öffnungen 18 wurden aus Gründen der Übersichtlichkeit nur zwei mit Bezugszeichen versehen. Alle beschriebenen Schalen können vorteilhaft und kostengünstig durch thermisches Tiefziehen hergestellt werden.

Ist das Dach des Einsatzfahrzeug schmaler als die Universal-Kunststoffverblendungsschale 34, braucht lediglich aus dem mittleren Bereich der Schale ein Stück herausgetrennt zu werden, so dass zwei symmetrische Halbschalen entstehen, deren fahrzeugdachzugewandte Unterseite dann entsprechend bearbeitet werden kann, wenn dies nicht bereits vor dem Heraustrennen des mittleren Bereiches erfolgt sein sollte. Die sich damit ergebenden Halbschalen können dann exakt den in den Figuren 3 bis 9 gezeigten Halbschalen 14 entsprechen.

Ob es in Einzelfall effizienter ist, zur Herstellung zweier Halbschalen 14 lange, also sich über die Breite eines typischen Fahrzeugdachs, zumindest aber über die Breite einer Grundplatte erstreckende Universal-Kunststoffverblendungsschalen 34 wie in Fig. 10 gezeigt, oder aber zwei kürzere, ggf. asymmetrisch ausgestaltete Universal-Kunststoffverblendungsschalen 10 wie in Fig. 1 gezeigt, zu verwenden, hängt von verschiedenen Faktoren ab. So kann es für Anwender, die nur wenige Warnbalken montieren, die aber manchmal mit gestuften Verblendungsschalen, manchmal mit glatten Verblendungsschalen verblendet werden sollen, logistische und einkaufsmäßige Vorteile besitzen, lediglich eine Universal-Kunststoffverblendungsschale vorzuhalten und von dieser dann jeweils nur den gestuften oder nur den glatten Abschnitt zu verwenden. Hier erlaubt es die Erfindung dem Fachmann vorteilhaft, die für den jeweiligen Anwendungsfall optimale Ausgestaltung zu wählen.

Wenn zwei Halbschalen verwendet werden, kann im Bereich der mittigen Stoßkante zwischen den Halbschalen ein Dichtungs- oder Verbindungsstück, z.B. eine Dichtlippe mit H-Profil eingesetzt werden. Es hat sich jedoch gezeigt, dass moderne Schneid- und Fräsverfahren so präzise arbeiten, dass die sich ergebende Stoßkante praktisch unsichtbar ist und die beiden Halbschalen bündig aneinander stoßen, so dass auf Zwischenstücke verzichtet werden kann.

Je nach kundenspezifischen Anforderungen können dem Befestigungsset bereits an die fahrzeugspezifische Dachkontur angepasste Kunststoffverblendungsschale(n) beigefügt werden, oder es werden dem Set eine oder mehrere Schalen beigefügt, die noch an ein Fahrzeugdach angepasst werden müssen. Wenn also Anspruch 1 von Verblendungsschalen spricht, so sind davon auch die oben beschriebenen Universal-Kunststoffverblendungsschalen 10 bzw. 34 umfasst. Für Großkunden und Fahrzeughersteller kann es günstiger sein, die Schalen selbst an unterschiedliche Dachgeometrien anzupassen, während andere Kunden ein bereits vorangepasstes und damit montagefertiges Set bevorzugen. Das Befestigungsset kann eine oder mehrere Kunststoffverblendungsschalen umfassen, wobei zwei Schalen durch Heraustrennen eines mittleren Abschnittes aus einer einzigen Schale oder aber durch Ablängen zweier gesonderter Schalen gebildet sein können. Das Set kann auch Schaumkörper u.dgl. umfassen, die als Stützkörper unter den Verblendungsschalen angeordnet werden.

Anstelle der beispielhaft beschrieben und gezeigten Winkelträger können auch Dachreling-Halterungen und andere Träger vorgesehen werden.

Die Erfindung beruht zum einen auf der Idee, die Funktionen Tragen und Verblenden voneinander zu entkoppeln, wodurch es vorteilhaft möglich wird, preisgünstige Träger und preisgünstige Verblendungen, die leicht an unterschiedliche Dachkonturen angepasst werden können, zu verwenden und auf komplexe Trag- und Verblendungskonstruktionen zu verzichten. Dies erlaubt es vorteilhaft, das für den Aufbau verschiedener Warnbalken unter Verwendung einer Grundplatte, an der je nach den jeweiligen kundenspezifischen Vorgaben ausgewählte verschiedene Signaleinrichtungen angebracht werden, bekannte Baukastenprinzip konsequent auch auf die fahrzeugspezifische Befestigung der Warnbalken anzuwenden und mit wenigen Standardteilen Befestigungen für unterschiedlichste Fahrzeugtypen zu realisieren. Zudem kann die Grundplatte sehr einfach gestaltet werden und muss nicht zur Aufnahme spezieller Dachgepäckträger ausgebildet sein. Zum anderen beruht die Erfindung auf der Idee, die Verblendung so auszugestalten, dass der oder die Träger mit Hilfe einer oder maximal zweier Verblendungsschale(n) so zwischen Fahrzeugdach und Grundplatte eingekapselt werden können, dass sie vollständig zur Fahrzeug- und Warnbalkenaußenseite verdeckt und vor Witterungseinflüssen und Manipulationen geschützt sind, was zudem einen ästhetisch ansprechenden Eindruck ergibt.

### BEZUGSZEICHENLISTE

- 10: Universal-Kunststoffverblendungsschale
- 12: Verblendungshalbschale
- 14: Verblendungshalbschale
- 16: Fahrzeugdach
- 18: Öffnung
- 20: Öffnung
- 22: Warnbalken
- 24: Grundplatte
- 26: Lichtmodul
- 28: Lichtmodul
- 30: Träger
- 32: Abdeckhaube
- 34: Universal-Kunststoffverblendungsschale

## Patentansprüche

1. Befestigungsset für Warnbalken von Einsatzfahrzeugen umfassend
- wenigstens einen an einem Fahrzeug befestigbaren Träger (30) zum Tragen einer Grundplatte (24) eines Warnbalkens (22), an der verschiedene optische und/oder akustische Signaleinrichtungen befestigt oder befestigbar sind, und
- wenigstens eine insbesondere durch computergestütztes Fräsen oder Schneiden an die Kontur des Fahrzeugdaches (16) des Fahrzeugs angepasste oder anpassbare Kunststoffverblendungsschale (12; 14; 34),
- wobei die Kunststoffverblendungsschale/-schalen (12; 14; 34) dazu ausgebildet ist/sind, im bestimmungsgemäßen Montagezustand sowohl den bei der Montage eines Warnbalkens (22) auf einem Fahrzeugdach (16) mittels des wenigstens einen Trägers (30) zwischen der Grundplatte (24) des Warnbalkens (22) und dem Fahrzeugdach (16) entstehenden Freiraum zu verblenden als auch eine den/die Träger (30) zu den Außenseiten von Fahrzeug und Warnbalken abdeckende Einkapselung zu bilden.

2. Befestigungsset nach Anspruch 1, **dadurch gekennzeichnet, dass** das Set genau eine Kunststoffverblendungsschale (34) umfasst, die sich im bestimmungsgemäßen Montagezustand über die Breite der Grundplatte (24) erstreckt.

3. Befestigungsset nach Anspruch 1, **dadurch gekennzeichnet, dass** das Set zwei Kunststoffverblendungshalbschalen (12; 14) umfasst, die sich im bestimmungsgemäßen Montagezustand zusammen über die Breite der Grundplatte (24) erstrecken.

4. Befestigungsset nach Anspruch 3, **dadurch gekennzeichnet, dass** die beiden Kunststoffverblendungshalbschalen (14) aus einer Universal-Kunststoffverblendungsschale (34) durch Heraustrennen eines mittleren Abschnittes gebildet sind.

5. Befestigungsset nach Anspruch 3, **dadurch gekennzeichnet, dass** die beiden Kunststoffverblendungshalbschalen (14) aus jeweils einer Universal-Kunststoffverblendungsschale (10) durch Abtrennen eines Endabschnittes gebildet sind.

6. Befestigungsset nach einem der Ansprüche 1 bis 4, **dadurch gekennzeichnet, dass** die Kunststoffverblendungsschale/-schalen (12; 14; 34) dazu ausgebildet ist/sind, ohne eigene Befestigungsmittel zwischen dem wenigstens einen Träger (30) und der Grundplatte (24) des Warnbalkens (22) fixiert zu werden.

7. Befestigungsset nach einem der Ansprüche 1 bis 6, **dadurch gekennzeichnet, dass** das Set zwei Träger (30) zum Tragen der Grundplatte umfasst, wobei die Träger in Form von am Dach (16) eines Fahrzeuges befestigbaren Winkelträgern (30) vorliegen.

8. Befestigungsset nach einem der Ansprüche 1 bis 6, **dadurch gekennzeichnet, dass** das Set zwei Träger zum Tragen der Grundplatte umfasst, wobei die Träger in Form von an einer Dachreling befestigbaren Halterungen vorliegen.

9. Verfahren zum Befestigen eines Warnbalkens (22) an einem Einsatzfahrzeug, wobei der Warnbalken eine Grundplatte (24) aufweist, an der verschiedene optischen und/oder akustische Signaleinrichtungen (26, 28) befestigt oder befestigbar sind, umfassend die Schritte
- Befestigen eines oder mehrerer Träger/Trägers (30) an einem Fahrzeug,
- Aufsetzen wenigstens einer insbesondere durch computergestütztes Fräsen oder Schneiden an die fahrzeugspezifische Dachkontur angepassten Kunststoffverblendungsschale (12; 14; 34) auf den oder die Träger (30),
- Aufsetzen der Grundplatte (24) auf die Schale/Schalen (12; 14; 34) und
- Befestigen der Grundplatte (24) an dem oder den Träger/Trägern (30).

10. Verfahren nach Anspruch 9, ferner umfassend einen Schritt des Herstellens zweier Kunststoffverblendungshalbschalen (14), die sich im bestimmungsgemäßen Montagezustand zusammen über die Breite der Grundplatte (24) erstrecken, durch Heraustrennens eines mittleren Abschnittes aus einer Universal-Kunststoffverblendungsschale (34).

11. Verfahren nach Anspruch 9, ferner umfassend einen Schritt des Herstellens zweier Kunststoffverblendungshalbschalen (14), die sich sich im bestimmungsgemäßen Montagezustand zusammen über die Breite der Grundplatte (24) erstrecken, durch Abtrennen jeweils eines Endabschnitts zweier Universal-Kunststoffverblendungsschale (10).

12. Verfahren nach einem der Ansprüche 9 bis 11, wobei zwei in Form von Winkelträgern (30) vorliegende Träger zum Tragen der Grundplatte (24) an dem Dach (16) des Fahrzeugs befestigt werden.

13. Verfahren nach einem der Ansprüche 9 bis 11, wobei zwei in Form von an einer Dachreling befestigbaren Halterungen vorliegende Träger zum Tragen der Grundplatte an den Dachrelingen des Fahrzeugs befestigt werden.

14. Verwendung einer insbesondere durch thermisches Tiefziehen hergestellten und insbesondere durch computergestütztes Fräsen oder Schneiden an die Kontur eines Fahrzeugdaches anpassbaren Kunststoffschale (12; 14; 34) zur Verblendung des bei der Montage eines Warnbalkens (22) auf einem Fahrzeugdach (16) mittels wenigstens eines an dem Fahrzeug befestigten Trägers zwischen einer Grundplatte (24) des Warnbalkens (22) und dem Fahrzeugdach (16) entstehenden Freiraums und zur Bildung einer den Träger (30) zu den Außenseiten von Fahrzeug und Warnbalken abdeckenden Einkapselung.

15. Einsatzfahrzeug mit einem auf dem Dach montierten Warnbalken (22), **dadurch gekennzeichnet, dass** der Warnbalken (22) unter Verwendung eines Befestigungssets nach einem der Ansprüche 1 bis 8 und/oder unter Anwendung eines Verfahrens nach einem der Ansprüche 9 bis 13 auf dem Dach (16) des Fahrzeuges montiert ist.
